# EUROPEAN PATENT SPECIFICATION

(11) **EP 2 253 895 B1**
(45) Date of publication and mention of the grant of the patent: **11.07.2018**
(21) Application number: 10382113.8
(22) Date of filing: 06.05.2010
(51) Int. Cl.: F24F 5/00, F24F 6/04, B60H 1/00, B60H 1/32

(54) **Air handling unit**
Zuluftgerät
Climatiseur

(30) Priority: 11.05.2009 ES 200930079 U
(43) Date of publication of application: 24.11.2010
(73) Proprietor: Col-Ven S.A., Santa Fe S3574 XAB (AR)
(72) Inventor: Colussi, Rafael Antonio, Guadalupe Norte, Santa Fe (AR); Venica, Néstor Juan, Guadalupe Norte, Santa Fe (AR)
(74) Representative: Polo Flores, Luis Miguel

(56) References cited:
- EP-A1- 1 468 852
- EP-A1- 1 502 785
- WO-A1-2005/080104
- FR-A1- 2 792 255
- US-A- 4 261 930
- US-A1- 2002 145 209

## Description

### OBJECT OF THE INVENTION

This invention concerns an air-handling unit, specifically an air-handling unit specially designed to be installed on camper-type vehicles, that is, mobile homes or motor homes, where said air-handling unit can be used while the vehicle is in motion or at rest, independently of the inclination of the vehicle's roof.

It is likewise an object of the invention that the apparatus be as silent as possible.

### BACKGROUND OF THE INVENTION

Air-handling units for vehicles of the type mentioned above are known, in which, as is customary in any apparatus of this kind, there is an evaporator with its corresponding evaporator mounting tray, with which assembly is associated a circuit of water driven by a pump, in such a way that, by means of a series of sensors and valves, a flow of water is made to circulate in the interior of said apparatus, in such a way that, when the water level in the circuit becomes insufficient, water from a tank is injected into it, all of this being controlled electronically by means of a control module.

Patent document EP-1468852-A discloses an exemplary air handling unit according to the preamble of claim 1.

The special structure of devices of this kind, and more specifically of their water-level sensors, makes it necessary for the vehicle to be at a complete stop and on a level surface for them to be used, which obviously limits their functionality a great deal.

Another problem presented by this type of apparatus is that it is noisy, due to the buzzing produced by the pump that circulates the water through the device's internal circuit.

### DESCRIPTION OF THE INVENTION

The air-handling unit proposed by the invention resolves the problems discussed above in an entirely satisfactory manner, as it makes little noise, can operate both while the vehicle is in motion and while it is at a stop, and can operate independently of the vehicle's inclination, as well as of the inclination of the vehicle's roof, on which the device will be installed.

To this end, the invention starts from the conventional basic structure described above, in which there is a water-evaporating unit, designed to be mounted on the vehicle's roof, in the interior of which is installed an evaporator associated with a water circuit, a solenoid valve, a tray of water to be evaporated, and a turbo fan, in such a way that outside air is pulled in by the turbo fan so that it passes over the evaporator and is driven toward the interior of the vehicle's habitation area, transferring part of its heat to the water and so decreasing in temperature, in such a way that the water in the circuit gradually evaporates and has to be replaced.

Now, moving on to the invention, and unlike conventional air-handling units, the air-handling unit of the invention incorporates an entirely novel water-flow circuit in which there is no need for a water-supply tank, since said supply takes place directly from the vehicle's own water tank.

The water coming from the vehicle's tank is not carried directly to the evaporator, but instead to the evaporator mounting tray, by means of an electric valve and the corresponding pump, in such a way that the evaporator is fed from said tray and by means of an additional hydraulic circuit.

More specifically, the water circuit that keeps the evaporator moist is subdivided into two subcircuits, connected to the front and rear areas of the evaporator mounting tray respectively, each of which subcircuits includes a pump moving water toward the evaporator, a water-level sensor, a container valve, and the corresponding filter.

In accordance with this structure, the air-handling unit will be operated by a control module, which will activate the different pumps and electric valves and the turbo fan in accordance with its programmed parameters and the readings of the corresponding water-level sensors, while the pumps will be covered with an insulating material, in order to discernibly reduce the device's noisiness.

In line with what has just been indicated, when the apparatus is turned on for the first time, the turbo fan will be turned on, by means of the control module, at its maximum speed for 2 seconds, after which it will continue to operate at a speed preset by the manufacturer. Once this period of time has passed, the water circuit will begin to work, in such a way that the control module will read the status of the sensors corresponding to each circuit and installed on each end of the evaporator mounting tray, in such a way that if neither sensor registers the presence of water in said tray, the electric valve of the water-intake circuit coming from the vehicle's tank will be activated, filling the tray in a predetermined length of time.

This special duplication of the evaporator's feeder circuit allows the evaporator to function correctly even when the vehicle is on a slant or in motion, or simply in the event that the vehicle's roof has an incline, since whenever there is water in the evaporator mounting tray, it will always be detected by at least one of the sensors, in accordance with the direction in which the vehicle is inclined, with only the needed pump or pumps being activated in each case.

With regard to the container valves, these prevent the flow of water contained in said circuits from backing up into the evaporator mounting tray instead of moving directly toward the evaporator when the pumps are not in operation.

Optionally, a branch line may also be included that connects the outlet of the container valves to the feeder circuit, with interposition of the corresponding unidirectional valve, in order that when the electric valve is opened, the water is distributed directly to the tray and in restricted form to the evaporator, as well as to the circuit's pumps, into which water is made to enter in order to purge them.

### DESCRIPTION OF THE DRAWINGS

As a complement to this description and with the objective of helping to provide a better understanding of the invention's characteristics, in accordance with a preferred embodiment, said description is accompanied, as an integral part of that description, by a set of drawings in which is represented, by way of illustration and not of limitation, the following:

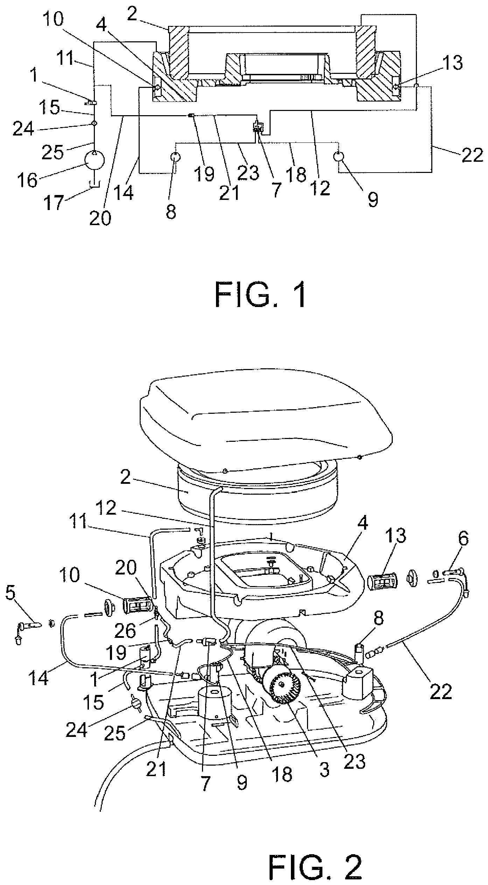

Figure 1.- Shows a schematic representation of an air-handling unit in accordance with the object of the invention, showing a section of the apparatus and, in schematic form, its different water circuits.
Figure 2.- Shows an exploded perspective view of the air-handling unit in the previous figure.

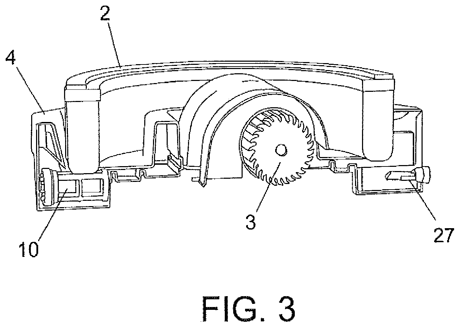

Figure 3.- Finally, shows a perspective view of the assembly in the previous figure as correctly installed, sectioned along its diameter.

### PREFERRED EMBODIMENT OF THE INVENTION

Looking at the indicated figures, it can be seen that the air-handling unit of the invention starts from the conventional structure of devices of this kind, in which there is an evaporator (2) through which water is made to pass in order to cool the air passing through said assembly, that air being driven by a turbo fan (3) located in the interior of an evaporator mounting tray (4) in which there is a water-receiving surface.

Now, as has been discussed above, the air-handling unit of the invention incorporates a water-intake circuit (11) carrying water directly to the evaporator mounting tray (4), which circuit is associated with an electric valve (1) located subsequent to the vehicle's own main pump (16), associated with the corresponding feeder tank (17) by way of the corresponding lines or hoses (15) and (25), a filter (24) being installed between the electric valve (1) and the pump (16).

In addition, there is associated with the evaporator mounting tray (4) a water-cycle circuit that carries the water contained within it to the evaporator (2), which circuit is subdivided into two subcircuits, a first subcircuit made up of a water pump (9), a water-level sensor (5), a container valve (7), a filter (10) for impurities, and the corresponding lines or hoses (18-22), in such a way that both the water-level sensor (5) and the filter for impurities (10) are located at the front end of the evaporator mounting tray (4), and a second subcircuit located at the rear end of said evaporator mounting tray (4), likewise made up of a second water pump (8), a second water-level sensor (6), a second container valve (7), and a second filter for impurities (13), connected by the corresponding lines (14-23), in such a way that both circuits, by way of their respective container valves, feed into a hose (12) through which the evaporator (2) is fed,

As has been discussed above, this hose (12) may optionally be connected to the water-intake circuit through a branch line (20-21), with interposition of the corresponding unidirectional valve (19), in such a way that when the electric valve (1) is opened, the water is distributed directly to the tray (4) by way of one hose (11) and in restricted form to the evaporator (2) by way of the other hose (12), as well as to the pumps (8) and (9), into which water is made to enter in order to purge them.

Finally, it remains only to indicate that, as has also been indicated above, the different electric valves, pumps, and sensors and the turbo fan will be operated by a control module with the corresponding programming software for the optimal control of the apparatus.

## Claims

1. An air-handling unit of the type constituted on the basis of an evaporator (2) through which water is made to pass so that it cools the air passing through said evaporator, the air being driven by means of a turbo fan (3), and an evaporator mounting tray (4), in which there is a water-receiving surface, being located below the evaporator, **characterized in that** it incorporates a water-intake circuit (11) that communicates directly with the evaporator mounting tray, which circuit is associated with an electric valve (1) by which it is connected to the vehicle's own main pump (16) associated with the corresponding feeder (17) by means of the corresponding lines, with the particular feature that the evaporator mounting tray is associated with a water-cycle circuit that carries the water contained within it to the evaporator, which circuit is subdivided into two subcircuits, in each of which is included a water pump (8, 9), a water-level sensor (5, 6), a container valve (7), a filter for impurities (10, 13), and the corresponding lines, in such a way that said subcircuits are set up in correspondence with the front and rear zones of the tray, respectively, while the different electric valves, pumps, and sensors and the turbo fan are operated by a control module with the corresponding programming software for optimal control of the apparatus.

2. An air-handling unit according to claim 1, **characterized in that** the evaporator's feeder circuit, to which the two subcircuits associated with both ends of the evaporator mounting tray are connected, may optionally be connected directly to the intake circuit through a branch line or hose, with interposition of the corresponding unidirectional valve,

3. An air-handling unit according to claim 1, **characterized in that** the pumps associated with the evaporator's two feeder subcircuits incorporate an acoustic insulation covering.

## Patentansprüche

1. Luftbehandlungseinheit eines auf der Basis eines Verdampfers (2) gebildeten Typs, durch den Wasser geleitet wird, so dass er die durch den erwähnten Verdampfer strömende Luft kühlt, wobei die Luft mittels eines Turbolüfters (3) angetrieben wird und eine Verdampfermontagewanne (4), in der sich unter dem Verdampfer eine Wasseraufnahmefläche befindet, **dadurch gekennzeichnet, dass** sie einen Wassereinlasskreislauf (11) umfasst, der direkt mit der Verdampfermontagewanne in Verbindung steht, wobei der Kreislauf einem elektrischen Ventil (1) zugeordnet ist, über das er mit der fahrzeugeigenen Hauptpumpe (16) verbunden ist, die der entsprechenden Zuleitung (17) über die entsprechenden Leitungen zugeordnet ist, mit der Besonderheit, dass die Verdampfermontagewanne einem Wasserkreislauf zugeordnet ist, der das darin enthaltene Wasser zum Verdampfer führt und in zwei Teilkreisläufe unterteilt ist, in denen jeweils eine Wasserpumpe (8, 9), ein Wasserstandssensor (5, 6), ein Behälterventil (7), ein Filter für Verunreinigungen (10, 13) und die entsprechenden Leitungen enthalten sind, so dass die erwähnten Teilkreisläufe entsprechend der vorderen bzw. hinteren Zone der Wanne aufgebaut sind, während die verschiedenen elektrischen Ventile, Pumpen und Sensoren sowie der Turbolüfter von einem Steuermodul mit der entsprechenden Programmiersoftware zur optimalen Steuerung des Gerätes bedient werden.

2. Luftbehandlungseinheit nach Anspruch 1, **dadurch gekennzeichnet, dass** der Zuleitungskreis des Verdampfers, an den die beiden Teilkreise der beiden Enden der Verdampfermontagewanne angeschlossen sind, unter Zwischenschaltung des entsprechenden unidirektionalen Ventils, wahlweise über eine Abzweigleitung oder einen Schlauch direkt mit dem Einlasskreislauf verbunden werden kann.

3. Luftbehandlungseinheit nach Anspruch 1, **dadurch gekennzeichnet, dass** die den beiden Zuleitungsteilkreisen des Verdampfers zugeordneten Pumpen eine Schalldämmverkleidung aufweisen.

## Revendications

1. Unité de traitement d'air constitué d'un évaporateur (2) à travers lequel on fait passer de l'eau pour refroidir l'air passant par ledit évaporateur, l'air étant entraîné par un turboventilateur (3), et un plateau de montage d'évaporateur (4), dans lequel il y a une surface recevant l'eau, situé en dessous de l'évaporateur, **caractérisé en ce qu'**il incorpore un circuit d'admission d'eau (11) qui communique directement avec le plateau de montage de l'évaporateur, lequel circuit est associé à une électrovanne (1) par laquelle il est relié à la propre pompe principale (16) du véhicule associée à l'alimentateur correspondant (17) au moyen des lignes correspondantes, avec la particularité que le plateau de montage de l'évaporateur est associé à un circuit à cycle d'eau qui transporte l'eau contenue dans l'évaporateur, lequel circuit est sous-divisé en deux sous-circuits, dans chacun desquels sont inclus une pompe à eau (8, 9), un capteur de niveau d'eau (5, 6), une vanne de réservoir (7), un filtre contre les impuretés (10, 13), et les lignes correspondantes, de telle sorte que lesdits sous-circuits soient configurés de façon à correspondre avec les zones avant et arrière du plateau, respectivement, tandis que les différentes électrovannes, pompes et capteurs et le turboventilateur sont commandés par un module de commande avec le logiciel de programmation correspondant pour une commande optimale du dispositif.

2. Unité de traitement d'air selon la revendication 1, **caractérisée en ce que** le circuit d'alimentation de l'évaporateur, auquel sont raccordés les deux sous-circuits associés aux deux extrémités du plateau de montage de l'évaporateur, peut être raccordé directement au circuit d'aspiration par l'intermédiaire d'une dérivation ou d'un tuyau, avec interposition de la vanne unidirectionnelle correspondante.

3. Unité de traitement d'air selon la revendication 1, **caractérisée en ce que** les pompes associées aux deux sous-circuits d'alimentation de l'évaporateur comportent un revêtement d'isolation acoustique.
